# EUROPÄISCHE PATENTSCHRIFT

(11) **EP 2 589 097 B1**
(45) Veröffentlichungstag und Bekanntmachung des Hinweises auf die Patenterteilung: **21.10.2015**
(21) Anmeldenummer: 11739003.9
(22) Anmeldetag: 01.07.2011
(51) Int. Cl.: H01M 4/66, H01M 4/04, H01M 4/136, H01M 4/1397, H01M 4/62, H01M 4/38, H01M 10/052, H01M 10/0566

(54) **KATHODENEINHEIT FÜR ALKALIMETALL-SCHWEFEL-BATTERIE**
CATHODE UNIT FOR AN ALKALI METAL/SULFUR BATTERY
UNITÉ CATHODE POUR BATTERIE SOUFRE-MÉTAL ALCALIN

(30) Priorität: 02.07.2010 DE 102010030887
(43) Veröffentlichungstag der Anmeldung: 08.05.2013
(73) Patentinhaber: Fraunhofer-Gesellschaft zur Förderung der angewandten Forschung e.V., 80686 München (DE)
(72) Erfinder: HAGEN, Markus, 75045 Walzbachtal (DE); ALTHUES, Holger, 01309 Dresden (DE); DÖRFLER, Susanne, 01187 Dresden (DE)
(74) Vertreter: Haggenmüller, Christian
(86) Internationale Anmeldenummer: PCT/EP2011/061134
(87) Internationale Veröffentlichungsnummer: WO 2012/001152

(56) Entgegenhaltungen:
- EP-A1- 2 339 674
- WO-A1-2011/023110
- WO-A1-2011/045466
- US-A1- 2004 058 246

## Beschreibung

Die vorliegende Erfindung betrifft eine Kathodeneinheit für eine Alkalimetall-Schwefel-Batterie und ein Verfahren zu deren Herstellung.

Lithium-Schwefel Batterien weisen theoretische Kapazitäten von 1672 mAh/g auf, die mehr als fünfmal so hoch sind wie bei Lithium-Ionen-Batterien (150-280 mAh/g). Um die Energiedichte von Batterien deutlich zu erhöhen, muss in Zukunft auf zu Lithium-Ionen-Batterien alternative Systeme wie Lithium-Schwefel oder Natrium-Schwefel gesetzt werden.

Elektroden für Batterien bestehen aus elektrochemisch aktiver und inaktiver Masse. Das Aktivmaterial besteht im Falle von Lithium-Ionen-Batterien z.B. aus LiCoO₂, LiMn₂O₄, LiNiO₂, S, Graphit usw. Das inaktive Material trägt nichts zur Kapazität der Elektrode bei. Seine Funktion besteht aus der Bereitstellung einer ausreichenden Leitfähigkeit und dem Zusammenhalt der Elektrode. Das Passivmaterial besteht aus Leitruß und Binder (z.B. PVdF, PVdF-co HFP, PTFE). Bei Schwefelkathoden ist zusätzlich ein poröser Kohlenstoff mit großer Oberfläche enthalten, der den Schwefel aufnimmt.

Bei der konventionellen Herstellung von Schwefelkathoden wird im Allgemeinen wie folgt vorgegangen. Ein poröser Kohlenstoff mit großer Oberfläche wird mit Schwefel gemischt, gemahlen und anschließend erhitzt. Der schwefelinfiltrierte Kohlenstoff wird anschließend mit Leitruß, einem Binder und einem Lösungsmittel gemischt. Die so hergestellte Paste wird auf einen metallischen Ableiter gerakelt. Das Lösungsmittel wird verdampft und die Paste anschließend über einen Kalander verdichtet. Generell besteht eine Schwefelkathode aus etwa 50 % Schwefel, 30 % porösem Kohlenstoff und jeweils 10 % Binder und Leitruß, und somit zu ca. 50 Gew.% aus elektrochemisch inaktivem Material, das zur Kapazität der Elektrode nichts beiträgt.

Eine Aufgabe der vorliegenden Erfindung besteht in der Bereitstellung einer Kathodeneinheit für eine Alkalimetall-Schwefel-Batterie mit möglichst hoher Kapazität sowie in der Bereitstellung eines Verfahrens zur Herstellung einer solchen Kathode, das möglichst einfach und effizient durchzuführen ist.

Gemäß eines ersten Aspekts der vorliegenden Erfindung wird diese Aufgabe gelöst durch die Bereitstellung einer Kathodeneinheit für eine Alkalimetall-Schwefel-Batterie, enthaltend:
- einen Kathodenableiter, der ein Metallsubstrat umfasst,
- Kohlenstoffnanoröhren, die auf dem Kathodenableiter fixiert sind, indem sie auf der Oberfläche des Kathodenableiters über eine chemische Gasphasenabscheidung hergestellt wurden, und in elektrisch leitendem Kontakt zu dem Metallsubstrat stehen,
- eine auf der Oberfläche der Kohlenstoffnanoröhren vorliegende elektrochemisch aktive Komponente, die aus Schwefel oder einem Alkalimetallsulfid ausgewählt wird,
wobei die Kohlenstoffnanoröhren in einer Menge von 0,1 mg bis 100 mg/cm² Kathodenableiter vorliegen.

Im Rahmen der vorliegenden Erfindung wird der Begriff "Kathodenableiter" in seiner üblichen, dem Fachmann geläufigen Bedeutung verstanden und bezeichnet die Komponente einer Batterie, die in leitfähigem Kontakt mit dem elektrochemisch aktiven Material der Kathode steht und die Stromabführung bzw. -zuführung von bzw. zu der aktiven Komponente der Elektrode bewirkt. Ein Ableiter einer Elektrode wird auch als "Stromabnehmer" (z.B. Kathodenstromabnehmer) bezeichnet.

Im Rahmen der vorliegenden Erfindung kann das metallische Substrat des Kathodenableiters aus den für dieses Bauteil üblicherweise verwendeten Metallen gefertigt sein.

Bevorzugt umfasst das metallische Substrat des Kathodenableiters eines oder mehrere der folgenden Metalle bzw. Metalllegierungen: Nickel, Aluminium, Eisen, Kupfer, Molybdän, Gold, Silber, oder deren Legierungen. In einer bevorzugten Ausführungsform wird Nickel, Aluminium oder eine Legierung dieser Metalle verwendet.

Der Kathodenableiter oder das metallische Substrat kann beispielsweise als Metallfolie vorliegen.

Im Rahmen der vorliegenden Erfindung kann es bevorzugt sein, dass das metallische Substrat eine erhöhte spezifische Oberfläche aufweist. Die Bereitstellung einer erhöhten Metalloberfläche kann durch geläufige Maßnahmen erreicht werden, z.B. durch eine entsprechende Porosität oder Strukturierung (z.B. Oberflächenstrukturierung, Einbringen von Löchern bzw. Öffnungen in die Metalloberfläche etc.) des Metallsubstrats.

Das Metallsubstrat kann beispielsweise ein poröses Metall, eine mit Löchern oder Öffnungen (bevorzugt definierten makroskopischen Löchern oder Öffnungen) in der Oberfläche versehene Metallstruktur, ein Metallgewebe, oder Kombination davon umfassen.

In einer bevorzugten Ausführungsform umfasst das metallische Substrat einen Metallschaum (z.B. Nickel- oder Aluminiummetallschaum), ein Streckmetall, ein Lochmetall oder Lochbleck, ein Metallgewebe, oder auch eine Kombination dieser metallischen Strukturen.

Im Rahmen der vorliegenden Erfindung wird der Begriff "Metallschaum" in seiner üblichen, dem Fachmann geläufigen Bedeutung verwendet und bezieht sich auf einen porösen Schaum aus einem metallischen Werkstoff.

Im Rahmen der vorliegenden Erfindung wird der Begriff "Streckmetall" in seiner üblichen, dem Fachmann geläufigen Bedeutung verwendet und bezieht sich auf einen metallischen Werkstoff mit Öffnungen in der Oberfläche, die durch versetzte Schnitte ohne Materialverlust unter gleichzeitig streckender Verformung entstehen.

Der Kathodenableiter kann ausschließlich aus dem metallischen Substrat bestehen. In diesem Fall sind die Kohlenstoffnanoröhren direkt auf dem metallischen Substrat fixiert.

Alternativ kann der Kathodenableiter zusätzlich weitere Komponenten aufweisen.

Gemäß einer spezifischen Ausführungsform kann auf dem metallischen Substrat eine Substratschicht aufgebracht sein, auf der wiederum die Kohlenstoffnanoröhren fixiert sind. Sofern vorhanden, ist diese Schicht so ausgestaltet, das ein elektrisch leitender Kontakt zwischen den Kohlenstoffnanoröhren und dem metallischen Substrat des Kathodenabnehmers gewährleistet ist. Dies wird in einer bevorzugten Ausführungsform dadurch erreicht, dass die Substratschicht eine sehr geringe Dicke aufweist, wobei die geeignete Dicke von dem Material der Substratschicht abhängt. Gegebenenfalls kann der Substratschicht noch ein leitfähiges Additiv zugegeben werden.

Wie nachfolgend noch eingehender erläutert werden wird, kann es sich bei dieser Substratschicht um eine Katalysatorschicht handeln. In einer bevorzugten Ausführungsform umfasst die Katalysatorschicht eine Cokatalysatorschicht, auf der zumindest ein Übergangsmetall vorliegt, z.B. in Form einer Übergangsmetallschicht oder in Form von Übergangsmetallpartikeln. Bei der Cokatalysatorschicht kann es sich z.B. um eine Oxidschicht, eine Nitridschicht oder Oxynitridschicht handeln. Als geeignete Materialien für die Cokatalysatorschicht können Aluminiumoxid, Siliciumdioxid, Magnesiumoxid, Titannitrid oder Siliciumnitrid genannt werden. Als geeignete Übergangsmetalle können Fe, Ni, Mo, Co, Cr, Mn oder deren Legierungen genannt werden. Wie nachfolgend noch genauer erläutert wird, kann diese Katalysatorschicht in einem bevorzugten Herstellungsverfahren der erfindungsgemäßen Kathodeneinheit die Umsetzung einer Kohlenstoff-haltigen Prekursorverbindung zu den Kohlenstoffnanoröhren katalysieren. Die Katalysatorschicht weist bevorzugt eine Dicke im Bereich von 5 nm bis 100 nm, bevorzugter von 20 nm bis 50 nm auf.

Anstelle einer Substratschicht können alternativ partikelförmige Komponenten auf dem metallischen Substrat des Kathodenableiters vorliegen. In einer spezifischen Ausführungsform kann es sich dabei um Katalysatorpartikel handeln. Wie bereits oben erwähnt, kann der Katalysator die Umsetzung einer Kohlenstoff-haltigen Prekursorverbindung wie z.B. Ethen zu den Kohlenstoffnanoröhren katalysieren. Hinsichtlich geeigneter Übergangsmetalle kann auf die obigen Ausführungen verwiesen werden.

Die Abmessungen des Kathodenableiters können in einem weiten Bereich variiert werden und hängen auch von den Abmessungen der Alkalimetall-Schwefel-Batterie ab, für die die Kathodeneinheit vorgesehen ist.

Grundsätzlich kann auch die Dicke des Kathodenableiters bzw. des metallischen Substrats über einen breiten Bereich variiert werden. Bei geringen Dicken lassen sich flexible Kathodenableiter realisieren, die eine gewickelte Struktur ermöglichen. Geringe Dicken sind auch hinsichtlich einer Gewichtsreduzierung günstig. Eine Mindestdicke sollte aufgrund ausreichender mechanischer Stabilität, der Herstellbarkeit und Stromführung (Mindestleitfähigkeit) eingehalten werden.

Beispielsweise kann der Kathodenableiter oder das metallische Substrat eine Dicke im Bereich von 0,5 µm bis 2 mm aufweisen.

Sofern das metallische Substrat eine metallische Folie umfasst bzw. in Form einer metallischen Folie vorliegt, sollte diese Folie möglichst dünn ausgestaltet sein. Bevorzugt liegt die Dicke der Folie im Bereich von 0,5 µm bis 100 µm, bevorzugter von 10 µm bis 50 µm, noch bevorzugter von 12 µm bis 30 µm.

Bei den metallischen Substraten, die eine Porosität oder eine gewisse Strukturierung aufweisen (wie z.B. Metallschäume, Streckmetalle etc.), kann die Dicke gegebenenfalls etwas höher gewählt werden, z.B. bis zu 2 mm.

Wie oben ausgeführt, enthält die erfindungsgemäße Kathodeneinheit außerdem Kohlenstoffnanoröhren, die auf dem Kathodenableiter fixiert sind, indem sie auf der Oberfläche des Kathodenableiters über eine chemische Gasphasenabscheidung hergestellt wurden, und in elektrisch leitendem Kontakt zu dem Metallsubstrat stehen,

Wie bereits oben erläutert, kann der elektrisch leitende Kontakt zwischen dem Metallsubstrat des Kathodenableiters und den Kohlenstoffnanoröhren dadurch gewährleistet sein, dass die Nanoröhren direkt auf dem Metallsubstrat fixiert sind. Sofern sich auf dem Metallsubstrat eine Substratschicht wie z.B. eine Katalysatorschicht befindet und die Nanoröhren nicht unmittelbar auf dem Metallsubstrat, sondern auf der Substratschicht fixiert sind, wird diese Substratschicht so ausgestaltet, dass weiterhin ein elektrisch leitender Kontakt zwischen Nanoröhren und Metallsubstrat gewährleistet wird. Wie oben erläutert, kann dies z.B. durch eine sehr geringe Dicke dieser Substratschicht erreicht werden.

Im Rahmen der vorliegenden Erfindung wird der Ausdruck "Fixierung der Kohlenstoffnanoröhren auf dem Kathodenableiter" so verstanden, dass die Wechselwirkungen zwischen den Nanoröhren und der Oberfläche des Kathodenableiters (d.h. entweder des metallischen Substrats oder gegebenenfalls der darauf angebrachten Substratschicht) ausreichend stark sind, um die Nanoröhren dauerhaft in einer spezifischen räumlichen Orientierung zu der Ableiteroberfläche zu fixieren.

Im Rahmen der vorliegenden Erfindung wird der Begriff "Kohlenstoffnanoröhren" in seiner üblichen, dem Fachmann geläufigen Bedeutung verstanden und bezieht sich auf mikroskopisch kleine röhrenförmige Gebilde aus Kohlenstoff, die als aufgerollte Graphenschicht (einwandig) oder aus mehreren konzentrischen Röhren aus aufgerollten Graphenschichten (mehrwandig) verstanden werden kann bzw. können.

Die Länge der Kohlenstoffnanoröhren kann über einen breiten Bereich variieren. Als geeignete Länge kann in diesem Zusammenhang z.B. ein Bereich von 5 µm bis 1000 µm genannt werden.

Der Durchmesser der Nanoröhren kann z.B. im Bereich von 0,1-100 nm, bevorzugter 1-50 nm, besonders bevorzugt 5-20 nm liegen.

Die Kohlenstoffnanoröhren liegen in einer Menge von 0,1 mg bis 100 mg, bevorzugter von 0,5 mg bis 20 mg, noch bevorzugter von 1 mg bis 10 mg pro cm² Kathodenableiter vor.

Die Kohlenstoffnanoröhren sind jeweils mit einem ihrer Enden in der Oberfläche des Kathodenableiters bzw. Metallsubstrats verankert bzw. fixiert. Eine solche Fixierung der Kohlenstoffnanoröhren über jeweils eines ihrer Enden auf der Oberfläche des Kathodenableiters bzw. Metallsubstrats ergibt sich als automatische Konsequenz einer chemischen Gasphasenabscheidung.

In einer bevorzugten Ausführungsform sind die Längsachsen der Kohlenstoffnanoröhren im Wesentlichen senkrecht zu der Oberfläche des Kathodenableiters orientiert. Der Begriff "im Wesentlichen senkrecht" umfasst auch noch solche Kohlenstoffnanoröhren, deren Längsachse um ± 20° von einer perfekten senkrechten Orientierung abweichen. Wie nachfolgend noch ausführlicher erläutert wird, kann sich diese senkrechte Ausrichtung der Nanoröhren zur Ableiteroberfläche als automatische Konsequenz eines bevorzugten Herstellungsverfahrens ergeben, wenn das Wachstum der Nanoröhren während des Herstellungsverfahrens senkrecht zur Ableiteroberfläche verläuft.

Wie oben ausgeführt, enthält die erfindungsgemäße Kathodeneinheit weiterhin eine auf der Oberfläche der Kohlenstoffnanoröhren vorliegende elektrochemisch aktive Komponente, die aus Schwefel oder einem Alkalimetallsulfid ausgewählt wird.

Im Rahmen der vorliegenden Erfindung ist es möglich, dass die aktive Komponente innerhalb der Kohlenstoffnanoröhren und/oder an deren Außenseite vorliegt.

Bevorzugt liegt der Schwefel als elektrochemisch aktive Komponente in einer Menge von 0,5 mg bis 10 mg pro cm² Kathodenableiter vor.

Wird ein Alkalimetallsulfid als elektrochemisch aktive Komponente verwendet, handelt es sich bevorzugt um Lithiumsulfid oder Natriumsulfid. In einer bevorzugten Ausführungsform handelt es sich um Li₂S oder Na₂S, jedoch nicht um ein Polysulfid. Bevorzugt liegt das Alkalimetallsulfid als elektrochemisch aktive Komponente in einer Menge von 0,5 mg bis 10 mg/cm² Kathodenableiter vor.

Gemäß eines weiteren Aspekts der vorliegenden Erfindung wird eine Alkalimetall-Schwefel-Batterie bereit gestellt, die die oben beschriebene Kathodeneinheit enthält.

Bevorzugt handelt es sich um eine Lithium-Schwefel-Batterie oder eine Natrium-Schwefel-Batterie.

Bevorzugt enthält die Anode eine oder mehrere der folgenden Komponenten: Metallisches Lithium, metallisches Natrium, Graphit, Legierungen aus Silizium oder Zinn, Komposite wie z.B. Silizium mit Kohlenstoff, Zinn mit Kohlenstoff, Hard Carbons.

Enthält die Kathodeneinheit Schwefel als elektrochemisch aktive Komponente, so kann die Anode in einer bevorzugten Ausführungsform metallisches Lithium oder metallisches Natrium enthalten.

Enthält die Kathodeneinheit ein Alkalimetallsulfid wie z.B. Lithium- oder Natriumsulfid als elektrochemisch aktive Komponente, so kann die Anode in einer bevorzugten Ausführungsform Graphit, Legierungen aus Silizium oder Zinn, Komposite wie z.B. Silizium mit Kohlenstoff, Zinn mit Kohlenstoff, Hard Carbons enthalten.

Gemäß eines weiteren Aspekts der vorliegenden Erfindung wird ein Verfahren zur Herstellung der oben beschriebenen Kathodeneinheit bereit gestellt, welches folgende Verfahrensschritte umfasst:
(i) Bereitstellung eines Kathodenableiters, der ein metallisches Substrat umfasst,
(ii) Fixieren von Kohlenstoffnanoröhren auf dem Kathodenableiter, indem sie auf der Oberfläche des Kathodenableiters über eine chemische Gasphasenabscheidung hergestellt werden, so dass ein elektrisch leitender Kontakt zwischen den Kohlenstoffnanoröhren und dem metallischen Substrat vorliegt,
(iii) Aufbringen einer elektrochemisch aktiven Komponente auf die Oberfläche der Kohlenstoffnanoröhren, wobei die elektrochemisch aktive Komponente aus Schwefel oder einem Alkalimetallsulfid ausgewählt wird.

Bezüglich der Eigenschaften des Kathodenableiters und des metallischen Substrats kann auf die bereits oben gemachten Ausführungen verwiesen werden.

In einer spezifischen Ausführungsform der vorliegenden Erfindung kann der Schritt (i) auch das Aufbringen einer Substratschicht wie z.B. einer Katalysatorschicht auf dem Metallsubstrat des Kathodenableiters umfassen. Alternativ können anstelle einer Katalysatorschicht auch Katalysatorpartikel direkt auf dem metallischen Substrat aufgebracht werden.

Die Substratschicht kann über allgemein bekannte Abscheidungsverfahren auf dem metallischen Substrat aufgebracht werden.

Handelt es sich bei der Substratschicht um eine Katalysatorschicht, die eine anorganische Cokatalysatorschicht wie z.B. eine Oxid-, Nitrid- oder Oxynitridschicht umfasst, kann diese z.B. über einen Sol-Gel-Prozess, ein CVD-Verfahren (d.h. chemische Gasphasenabscheidung) oder ein PVD-Verfahren (physikalische Gasphasenabscheidung) aufgebracht werden.

Sol-Gel-, CVD- und PVD-Verfahren zur Beschichtung von Oberflächen sind dem Fachmann grundsätzlich bekannt.

Bei Sol-Gel-Prozessen werden allgemein geeignete Vorstufenverbindungen (Prekursor) wie z.B. Metall- oder Halbmetallalkoxide durch Hydrolyse und anschließende thermische Behandlung (d.h. Vernetzung der hydrolysierten Komponenten) in entsprechende Oxidschichten bzw. Nitrid- oder Oxynitridschichten überführt. Geeignete Prekursor und geeignete Verfahrensbedingungen sind dem Fachmann grundsätzlich bekannt.

Für das Aufbringen einer Aluminiumoxidschicht auf dem metallischen Kathodenableiter können z.B. Aluminiumalkoxide wie Aluminiumisopropoxid oder auch Aluminium-isopropoxid-acetylacetonat-Mischkomplexe als geeignete Prekursor genannt werden.

Geeignete Prekursor für das Aufbringen einer SiO₂-Trägerschit umfassen z.B. Siliziumalkoxide wie Siliziumtetrasiloxan.

Der Prekursor bzw. dessen bereits hydrolysierte Folgeprodukte können über gängige Verfahren auf die Oberfläche des metallischen Substrats aufgebracht werden, z.B. durch Tauchbeschichtung, Schleuderbeschichtung, Sprühbeschichtung, Rakelbeschichtung oder Druckverfahren. Anschließend kann gegebenenfalls die Hydrolyse der Prekursorverbindung fortgesetzt werden und durch entsprechende thermische Behandlung die Oxid-, Nitrid- oder Oxynitridschicht ausgebildet werden. Die katalytisch aktive Komponente, bevorzugt eines der bereits oben erwähnten Übergangsmetalle, kann ebenfalls aus flüssiger Phase, z.B. aus Lösungen organischer Metallsalze erfolgen. Diese werden bevorzugt nach der Auftragung durch thermische Behandlung zu einer Oxidschicht umgewandelt und später bevorzugt durch reduktive Bedingungen (z.B. in einem späteren CVD-Verfahren zur Herstellung der Kohlenstoffnanoröhren auf dem Kathodenableiter) in die katalytisch aktiven Metallpartikel überführt.

Sofern eine Substratschicht auf das metallische Substrat aufgebracht wird, liegt deren Schichtdicke bevorzugt im Bereich von 5 nm bis 100 nm, bevorzugter 20 nm bis 50 nm. Die Verfahrensparameter, mit denen die Dicke der abgeschiedenen Schicht gesteuert werden kann, sind dem Fachmann grundsätzlich bekannt.

Wie oben erwähnt, erfolgt in einem weiteren Verfahrensschritt (ii) das Fixieren von Kohlenstoffnanoröhren auf dem Kathodenableiter, indem sie auf der Oberfläche des Kathodenableiters über eine chemische Gasphasenabscheidung hergestellt werden, so dass ein elektrisch leitender Kontakt zwischen den Kohlenstoffnanoröhren und dem metallischen Substrat vorliegt.

Die Fixierung der Kohlenstoffnanoröhren wird dadurch realisiert, dass diese auf der Oberfläche des Kathodenableiters über einen chemischen Gasphasenabscheidungsprozess (CVD) hergestellt werden. Durch die Verwendung der Oberfläche des Kathodenableiters (d.h. entweder der Oberfläche des metallischen Substrats oder der Oberfläche der Substratschicht wie z.B. der Katalysatorschicht) als Reaktions- und Abscheidungsfläche wird eine feste Fixierung der Nanoröhren auf dieser Ableiteroberfläche bewirkt.

Wie bereits oben erwähnt, werden die Kohlenstoffnanoröhren über eine chemische Gasphasenabscheidung direkt auf der Oberfläche des Kathodenableiters hergestellt. Die Herstellung von Kohlenstoffnanoröhren über ein chemisches Gasphasenabscheidungsverfahren ist grundsätzlich bekannt. Bei diesem Verfahren kommt es zu einer katalytischen Zersetzung von geeigneten Kohlenstoff-haltigen Prekursorverbindungen. Im Falle eines solchen Gasphasenabscheidungsverfahrens ist es bevorzugt, dass in Schritt (i) zunächst die bereits oben beschriebene Katalysatorschicht auf dem Metallsubstrat aufgebracht wird.

Bevorzugt umfasst die chemische Gasphasenabscheidung die Zersetzung einer Kohlenstoff-haltigen Prekursorverbindung in Anwesenheit eines Katalysators. Bevorzugt wird die Kohlenstoff-haltige Prekursorverbindung aus C₂₋₄-Olefinen wie z.B. Ethen, C₁₋₄-Alkanen wie z.B. Methan oder Ethan, C₂₋₄-Alkinen wie z.B. Acetylen, Cycloalkanen wie z.B. Cyclohexan, aromatischen Kohlenwasserstoffen wie z.B. Xylol ausgewählt.

Bevorzugt umfasst der Katalysator ein oder mehrere Übergangsmetalle wie z.B. Fe, Co, Mo, Ni, Cr, Mn, oder eine Legierung dieser Übergangsmetalle.

Bevorzugt erfolgt das in Kontakt bringen der Kohlenstoff-haltigen Prekursorverbindung mit dem Katalysator bei einer Temperatur im Bereich von 600°C bis 1000°C, bevorzugter von 725°C bis 750°C.

Bevorzugt erfolgt das in Kontakt bringen der Kohlenstoff haltigen Prekursorverbindung mit dem Katalysator bei Atmosphärendruck.

Die Kohlenstoffnanoröhren wachsen innerhalb einer bestimmten Katalysatorschichtdicke vertikal gerichtet auf dem Substrat. Der CVD Prozess wird bevorzugt bei Atmosphärendruck gefahren, er lässt sich somit leicht aufskalieren und für die kontinuierliche Beschichtung von Metallbändern einsetzen.

In der oben beschriebenen bevorzugten Ausführungsform einer unmittelbaren Herstellung der Nanoröhren auf der Oberfläche des Kathodenabscheiders werden Kohlenstoffnanoröhren erhalten, deren Längsachsen im Wesentlichen senkrecht zu der Oberfläche des Kathodenableiters orientiert sind. Der Begriff "im Wesentlichen senkrecht" umfasst auch noch solche Kohlenstoffnanoröhren, deren Längsachse um ± 20° von einer perfekten senkrechten Orientierung abweichen.

Nach dem Fixieren der Kohlenstoffnanoröhren auf dem Kathodenableiter in Schritt (ii) erfolgt in Schritt (iii) das Aufbringen einer elektrochemisch aktiven Komponente auf die Oberfläche der Kohlenstoffnanoröhren, wobei es sich bei der elektrochemisch aktiven Komponente um Schwefel oder ein Alkalimetallsulfid wie Lithiumsulfid oder Natriumsulfid handelt.

Die elektrochemisch aktive Komponente kann über gängige Verfahren auf der Oberfläche der Kohlenstoffnanoröhren abgeschieden werden.

Das Aufbringen von Schwefel auf die Kohlenstoffnanoröhren kann über geschmolzenen Schwefel, Schwefelsublimation oder in einem Lösungsmittel gelösten Schwefel erfolgen.

In einer bevorzugten Ausführungsform wird der Schwefel in einem Lösungsmittel gelöst und das Lösungsmittel mit den Kohlenstoffnanoröhren in Kontakt gebracht. Als Lösungsmittel eignen sich unpolare oder nur schwach polare Substanzen wie z.B. Hexan, Toluol, Aceton, Ammoniak oder Kohlenstoffdisulfid.

Die Verwendung eines Lösungsmittels bietet den Vorteil, dass die elektrochemisch aktive Komponente wie der Schwefel auf diesem Wege sehr fein, gleichmäßig verteilt und kontrolliert aufgebracht werden kann.

Durch die Wahl der Temperatur des Lösungsmittels lässt sich die Menge an lösbarem Schwefel bestimmen. In der Regel gilt, je wärmer das Lösungsmittel, desto mehr Schwefel kann gelöst werden. Die optimale Menge an aufgebrachtem Schwefel pro Flächeneinheit des Kathodenableiters hängt von vielen Faktoren ab (z.B. Gewicht und Höhe der Kohlenstoffnanoröhren).

In einer bevorzugten Ausführungsform beträgt die Menge an aufgebrachtem Schwefel 0,5 bis 10,0 mg/cm² Kathodenableiter.

In einer bevorzugten Ausführungsform werden sowohl das den Schwefel enthaltende Lösungsmittel als auch der metallische Kathodenableiter vor und/oder während des Aufbringens des Schwefels in Schritt (iii) erwärmt. Bevorzugt wird so ein schnelles bzw. frühzeitiges Auskristallisieren des Schwefels beim in Kontakt bringen des Lösungsmittel mit dem Kathodenableiter und den Kohlenstoffnanoröhren verhindert. Damit kann eine besonders gleichmäßige Verteilung des Schwefels erreicht werden, wie nachfolgend am Beispiel von Toluol als Lösungsmittel beschrieben wird.

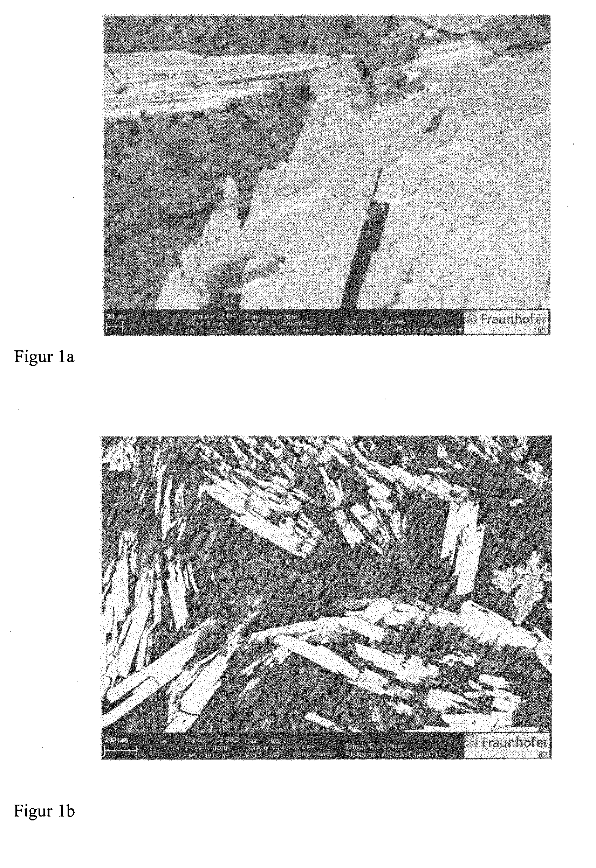

In 40 ml Toluol bei 80°C wurden 3,0 g Schwefel gelöst. 1,25 mg Schwefel können hier bereits theoretisch mit 17 µl aufgebracht werden. Bringt man das heiße Lösungsmittel auf ein Substrat mit Raumtemperatur auf, fällt sofort länglicher kristalliner Schwefel auf der Oberfläche der Kohlenstoffnanoröhren aus. Wie gut in Figur 1 ersichtlich, ist die Oberfläche nicht komplett mit Schwefel bedeckt.

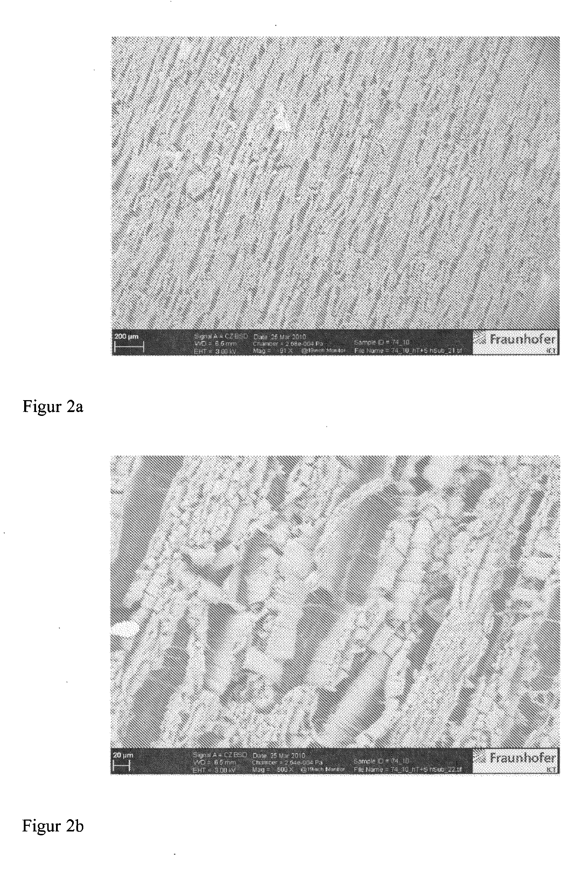

Erhitzt man neben dem Lösungsmittel auch den metallischen Kathodenableiter (Heizplatte >80 °C), so kann ein Auskristallisieren des Schwefels wie oben verhindert und eine gleichmäßigere Verteilung erzielt werden (vgl. Figur 2). Wird der Kathodenableiter länger als 1 Std. geheizt, so diffundiert der Schwefel tief in die Kohlenstoffnanoröhren ein.

Soll ein Alkalimetallsulfid wie Lithium- oder Natriumsulfid als elektrochemisch aktive Komponente auf die Oberfläche der Kohlenstoffnanoröhren aufgebracht werden, kann dies gemäß einer bevorzugten Ausführungsform dadurch realisiert werden, dass zunächst Schwefel auf die Oberfläche der Kohlenstoffnanoröhren aufgebracht wird und anschließend mit einer reaktiven Alkalimetallverbindung, bevorzugt einer metallorganischen Alkalimetallverbindung wie z.B. n-Butyllithium oder n-Butylnatrium, zu einem Alkalimetallsulfid umgesetzt wird. Bezüglich der Aufbringung des Schwefels kann auf die obigen Ausführungen verwiesen werden. Das in Kontakt bringen des Schwefels und der reaktiven Alkalimetallverbindung kann dadurch erfolgen, dass die reaktive Alkalimetallverbindung ebenfalls über ein Lösungsmittel zugeführt wird und die Umsetzung zum Alkalimetallsulfid bei erhöhter Temperatur bewirkt wird.

Im Rahmen der vorliegenden Erfindung ist es auch möglich, das Alkalimetallsulfid in einem Lösungsmittel (z.B. Ethanol) zu lösen und diese Lösung anschließend mit der Oberfläche der Kohlenstoffnanoröhren in Kontakt zu bringen, wobei es bevorzugt sein kann, dass der metallische Kathodenableiter vor und/oder während des Aufbringens der Alkalimetallsulfidlösung erwärmt werden

Die gemäß des oben beschriebenen Verfahrens erhältliche Kathodeneinheit lässt sich mit einer geeigneten Anode kombinieren, um so eine Alkalimetall-Schwefel-Batterie bereit zu stellen. Hinsichtlich geeigneter Anoden kann auf die oben gemachten Ausführungen verwiesen werden.

Durch das nachfolgende Beispiel wird die vorliegende Erfindung eingehender erläutert.

### Beispiele

### Beispiel 1

### Herstellung von senkrecht orientierten Kohlenstoffnanoröhrchen auf einem Kathodenableiter

Für die nasschemische Abscheidung der Aluminiumoxidschicht wird ein in ⁱPropanol gelöster Aluminium-ⁱPropoxid-Acetylacetonat-Mischkomplex verwendet. Die Konzentration beträgt 60 g/l bezogen auf das hydrolysierte Ausgangsprodukt Aluminiumtriisopropylat. Die zu beschichtende Ableiterfolie (Nickel) wird in die beschriebene Lösung getaucht, mit 2,0 mm/s herausgezogen und anschließend 5 min an Luft getrocknet. Im folgenden Schritt erfolgt eine thermische Behandlung an Luft bei 300 °C ebenfalls für 5 min. Die Katalysatorschicht, die aus einem 2:3 Verhältnis Eisen:Kobalt besteht, wird ebenfalls über eine Tauchbeschichtung aufgetragen. Hierfür wird eine 0,22 M Lösung aus Fe(2-ethylhexanoat)₃ bzw. Co(2-ethylhexanoat)₂ in ⁱPropanol hergestellt. Die mit Al₂O₃ beschichtete Ableiterfolie wird nun in die Katalysatorkomplexlösung getaucht und mit 3,0 mm/s herausgezogen. Anschließend erfolgen das fünfminütige Trocknen bei Raumtemperatur sowie die thermische Behandlung an Luft bei 350 °C für 5 Minuten. Die zweifach beschichtete Ableiterfolie wird anschließend in ein Quarzrohr (Durchmesser 40 mm) gelegt, das in einem klappbaren Röhrenofen positioniert ist. Um eine Reaktion mit Luftsauerstoff zu vermeiden, wird das Quarzrohr an beiden Seiten mit KF Flanschen/Gasverteilungsadapter verschlossen und gründlich mir Argon gespült. Der Ofen wird dann mit 3,0 slm Ar Spülstrom auf 750 °C aufgeheizt, wobei im Inneren des Quarzrohres bei der Position des Substrates eine Temperatur von 725 bis 730 °C herrscht. Nach dem Erreichen der Temperatur strömen gleichzeitig 1,0 slm Argon, 0,67 slm Wasserstoff, 0,17 slm Ethen und 85 ppm Wasserdampf über das Substrat. Der Wasserdampf wird mit Hilfe eines Edelstahlverdampfers und Argon als Trägergas eingebracht. Nach 20 min Wachstumszeit wird die Ofenklappe geöffnet und unter Argon auf ca. 200 °C abgekühlt. Erst dann können die Flansche geöffnet und das beschichtete Substrat entnommen werden. Mit der angegebenen Wachstumszeit von 20 min können bis zu 160 µm hohe CNT Schichten auf Nickelfolie erzeugt werden.

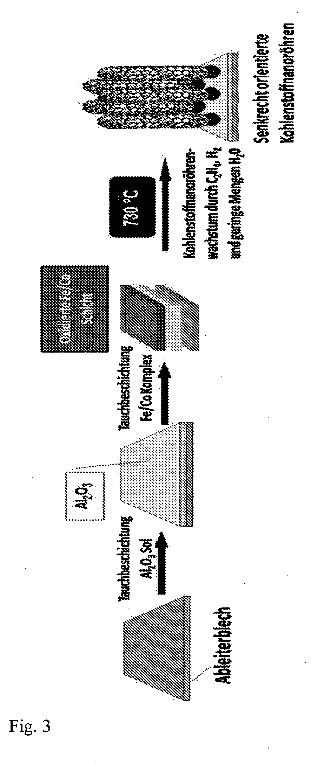

Der Verfahrensablauf wird schematisch in Figur 3 dargestellt.

### Aufbringen von Schwefel über ein Lösungsmittel

In 40 ml Toluol bei 80 °C wurden 3,0 g Schwefel gelöst. 1,25 mg Schwefel können hier bereits theoretisch mit 17 µl aufgebracht werden.

Neben dem Lösungsmittel wird auch der metallische Kathodenableiter erhitzt (Heizplatte >80 °C), so dass ein Auskristallisieren des Schwefels verhindert und eine gleichmäßigere Verteilung erzielt wird. Die gleichmäßige Verteilung des Schwefels auf den Kohlenstoffnanoröhren ist in Figur 2 gezeigt. Wird der Ableiter länger als 1 Std. geheizt, so diffundiert der Schwefel tief in die Kohlenstoffnanoröhren ein.

### Kapazitive Messungen

An einer Kathode, die analog dem oben beschriebenen Beispiel unter Verwendung einer Lösungsmittelinfiltration und mit Schwefel als elektrochemisch aktiver Komponente hergestellt wurde, wurden spezifische Kapazitäten als Funktion der Zyklenzahl bestimmt.

Als Vergleichsprobe wurde eine Schwefelkathode herangezogen, die über ein konventionelles Pastenverfahren, wie es in NATURE MATERIALS, Vol. 8, Juni 2009 (X. Ji et al.) beschrieben wird, erhältlich ist. In einem solchen Pastenverfahren wird ein poröser Kohlenstoff mit großer Oberfläche mit Schwefel gemischt (z.B. 3:7 Massenverhältnis), gemahlen und anschließend auf 155 °C erhitzt. Bei dieser Temperatur ist Schwefel flüssig, hat die niedrigste Viskosität und kann somit gut in die Poren des Kohlenstoffs fließen. Der schwefelinfiltrierte Kohlenstoff wird anschließend mit Leitruß (z.B. Super S Carbon) einem Binder (z.B. PVdF) und einem Lösungsmittel (z.B. NMP, Zyklopentanon etc.) gemischt. Die Massenverhältnisse sind ungefähr 84 % Schwefel+Kohlenstoff, 8 % Leitruß und 8 % Binder. Die so hergestellte Paste wird auf ein Ableiterblech gerakelt. Das Lösungsmittel wird verdampft und die Paste anschließend über einen Kalander verdichtet. Generell besteht eine solche Schwefelkathode grob aus 50 % Schwefel, 30 % porösen Kohlenstoff und jeweils 10 % Binder und Leitruß.

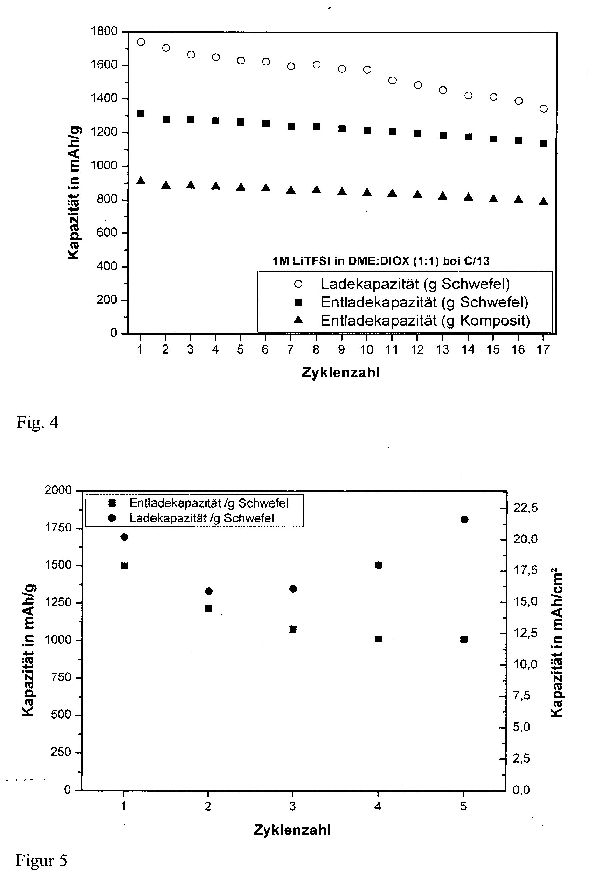

Figur 4 zeigt die Kapazitätswerte (bezogen auf die Schwefelmasse) als Funktion der Zyklenzahl einer erfindungsgemäßen Kathodeneinheit mit Ableiterfolie und darauf angebrachten, senkrecht orientierten Kohlenstoffnanoröhren im Vergleich zu der über das oben beschriebene Pastenverfahren hergestellten Schwefelkathode.

Wie Figur 4 zu entnehmen ist, können mit der erfindungsgemäßen Kathodeneinheit höhere Kapazitätswerte erzielt werden.

### Beispiel 2

Beispiel 2 beschreibt eine Schwefelelektrode, die mit einem Kathodenableiter aus Nickelschaum mit 110 ppi hergestellt wurde.
Auf dem Ableiter wurden Kohlenstoffnanoröhren mit Hilfe einer Katalysatorsubstratschicht über CVD angebracht und die Elektrode anschließend mit Schwefel infiltriert.

Figur 5 zeigt die Kapazität einer Ni-Schaumelektrode mit Kohlenstoffnanoröhren und Schwefel über die ersten fünf Zyklen. Auf dem Ableiter der Größe 0,785 cm² wurden 9,1 mg Schwefel eingeschmolzen. Die Masse der Kohlenstoffnanoröhren lag bei 2,5 mg. Als Elektrolyt wurde 1M LiTFSI in DME:DIOX (2:1, v:v) mit LiNO3 Additiv verwendet. Die Zelle wurde bei einem konstanten Strom von 0,5 mA gegen Lithium Metall zwischen 1,0 und 3,0 V gezykelt. Die erreichten Flächenkapazitäten liegen zwischen 12 und 15 mAh/cm². Im Vergleich werden mit konventionell über Pastenverfahren hergestellten Lithium-Ion oder Lithium Schwefel Zellen bei entsprechenden Stromdichten nur 0,5-3,0 mAh/cm² erreicht.

### Beispiel 3

Beispiel 3 beschreibt eine Schwefelelektrode, die mit einem Kathodenableiter aus Nickelschaum mit 110 ppi hergestellt wurde.
Auf dem Ableiter wurden Kohlenstoffnanoröhren mit Hilfe einer Katalysatorsubstratschicht über CVD angebracht und die Elektrode anschließend mit Schwefel infiltriert.

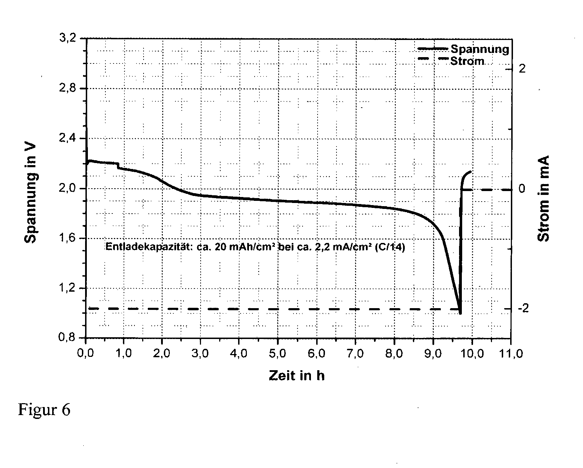

Figur 6 zeigt den Spannungs- und Stromverlauf einer Ni-Schaumelektrode mit Kohlenstoffnanoröhren und Schwefel bei der ersten Entladung. Auf dem Ableiter der Größe 0,9 cm² wurden 17,1 mg Schwefel eingeschmolzen. Die Masse der Kohlenstoffnanoröhren lag bei 1,6 mg. Als Elektrolyt wurde 1M LiTFSI in DME:DIOX (2:1, v:v) mit LiNO3 Additiv verwendet. Die Zelle wurde bei einem konstanten Strom von 2,2 mA/cm² (C/14) Elektrode gegen Lithium Metall zwischen 1,0 und 3,0 V gezykelt. Die erreichte Flächenkapazität bei der ersten Entladung lag bei ca. 20 mAh/cm². Dies entspricht einer Kapazität von ca. 1260 mAh/g Schwefel. Im Vergleich werden mit konventionell über Pastenverfahren hergestellten Lithium-Ion oder Lithium Schwefel Zellen bei entsprechenden Stromdichten nur 0,5-3,0 mAh/cm² erreicht.

Die Beispiele 2 und 3 belegen, dass sich für Alkalimetall-Schwefel-Batterien durch die Wahl von Ableiterstrukturen mit erhöhter Oberfläche und mit nachfolgender Kohlenstoffnanoröhren-Beschichtung die Flächenkapazitäten noch weiter verbessern lassen.

Hinsichtlich der Vorteile, die mit der vorliegenden Erfindung realisierbar sind, lässt sich Folgendes festhalten:
- Es lässt sich elektrochemisch inaktives Material sparen (Leitruß und Binder). Eine durchschnittliche Schwefelkathode besteht aus 50 % Schwefel (Aktivmaterial) und 50 % inaktivem Material (Binder, Leitruß, poröser Kohlenstoff mit großer Oberfläche). Durch die vorliegende Erfindung lassen sich Schwefelkathoden mit mindestens 70 % Aktivmaterial und 30 % inaktivem Material realisieren. Dies führt zu deutlich höheren Kapazitäten der gesamten Elektrode!
- Die Schwefelausnutzung ist sehr hoch (vgl Figur 4) und liegt bei bis zu 85 % und damit deutlich höher als bei Pastenelektroden mit Binder und Leitruß. Es werden sehr hohe Kapazitäten erreicht.
- Die Schwefelinfiltration über ein Lösungsmittel ist sehr einfach steuerbar, kostengünstig und wirkungsvoll. Verfahren über Aufbringen von festem Schwefel oder sublimierten Schwefel sind ebenfalls möglich.
- Durch den speziellen Aufbau der Kohlenstoffnanoröhren-Elektroden werden sehr geringe Widerstände erreicht. Da jede Kohlenstoffnanoröhre auf dem leitfähigen Substrat (d.h. metallischer Kathodenableiter) fixiert ist, bestehen durch die gesamte Schicht leitfähige Pfade, ohne zusätzliche Kohlenstoff/Kohlenstoff-Kontaktwiderstände hervorzurufen, wie sie in Leitruß gefüllten Elektroden vorhanden sind
- Eine kontinuierliche Massenherstellung ist sowohl seitens der Herstellung der Kohlenstoffnanoröhren als auch seitens der Aufbringung der elektrochemisch aktiven Komponente leicht möglich.

## Patentansprüche

1. Eine Kathodeneinheit für eine Alkalimetall-Schwefel-Batterie, enthaltend:
- einen Kathodenableiter, der ein Metallsubstrat umfasst,
- Kohlenstoffnanoröhren, die auf dem Kathodenableiter fixiert sind, indem sie auf der Oberfläche des Kathodenableiters über eine chemische Gasphasenabscheidung hergestellt wurden, und die in elektrisch leitendem Kontakt zu dem Metallsubstrat stehen,
- eine auf der Oberfläche der Kohlenstoffnanoröhren vorliegende elektrochemisch aktive Komponente, die aus Schwefel oder einem Alkalimetallsulfid ausgewählt wird,
wobei die Kohlenstoffnanoröhren in einer Menge von 0,1 mg bis 100 mg/cm² Kathodenableiters vorliegen.

2. Die Kathodeneinheit gemäß Anspruch 1, wobei das Metallsubstrat eine Metallfolie ist.

3. Die Kathodeneinheit gemäß Anspruch 1 oder 2, wobei die Kohlenstoffnanoröhren direkt auf dem Metallsubstrat fixiert sind; oder wobei eine Substratschicht auf dem Metallsubstrat vorliegt und die Kohlenstoffnanoröhren auf der Substratschicht fixiert sind.

4. Die Kathodeneinheit gemäß einem der vorstehenden Ansprüche, wobei die elektrochemisch aktive Komponente in einer Menge von 0,5 mg bis 10 mg/cm² Kathodenableiter vorliegt

5. Die Kathodeneinheit gemäß einem der vorstehenden Ansprüche, wobei die Längsachsen der fixierten Kohlenstoffnanoröhren im Wesentlichen senkrecht zur Oberfläche des Kathodenableiters orientiert sind.

6. Eine Alkalimetall-Schwefel-Batterie, enthaltend die Kathodeneinheit nach einem der Ansprüche 1-5.

7. Verfahren zur Herstellung der Kathodeneinheit nach einem der Ansprüche 1-5, folgende Verfahrensschritte umfassend:
(i) Bereitstellung eines Kathodenableiters, der ein metallisches Substrat umfasst,
(ii) Fixieren von Kohlenstoffnanoröhren auf dem Kathodenableiter, indem sie auf der Oberfläche des Kathodenableiters über eine chemische Gasphasenabscheidung hergestellt werden, so dass ein elektrisch leitender Kontakt zwischen den Kohlenstoffnanoröhren und dem metallischen Substrat vorliegt,
(iii) Aufbringen einer elektrochemisch aktiven Komponente auf die Oberfläche der Kohlenstoffnanoröhren, wobei die elektrochemisch aktive Komponente aus Schwefel oder einem Alkalimetallsulfid ausgewählt wird.

8. Das Verfahren gemäß Anspruch 7, wobei in Schritt (i) eine Substratschicht oder eine partikelförmige Komponente auf dem metallischen Substrat aufgebracht wird.

9. Das Verfahren gemäß einem der Ansprüche 7-8, wobei in Schritt (iii) der Schwefel in einem Lösungsmittel gelöst und das Lösungsmittel mit den Kohlenstoffnanoröhren in Kontakt gebracht wird.

10. Das Verfahren gemäß Anspruch 9, wobei sowohl das den Schwefel enthaltende Lösungsmittel als auch der metallische Kathodenableiter vor und/oder während des Aufbringens des Schwefels in Schritt (iii) erwärmt werden.

11. Das Verfahren nach einem der Ansprüche 7-10, wobei zunächst Schwefel auf die Oberfläche der Kohlenstoffnanoröhren aufgebracht wird und anschließend mit einer reaktiven Alkalimetallverbindung, bevorzugt einer metallorganischen Alkalimetallverbindung, zu einem Alkalimetallsulfid umgesetzt wird

## Claims

1. Cathode unit for an alkali metal-sulphur battery, comprising:
- a cathode collector comprising a metal substrate,
- carbon nanotubes fixed on the cathode collector by producing them on the surface of the cathode collector by means of chemical gas phase deposition, and which are in electrically conductive contact with the metal substrate,
- an electrochemically active component which is present on the surface of the carbon nanotubes and is selected from sulphur or an alkali metal sulphide,
wherein the carbon nanotubes are present in an amount of 0.1 mg to 100 mg/cm² of cathode collector.

2. Cathode unit according to Claim 1, wherein the metal substrate is a metal foil.

3. Cathode unit according to Claim 1 or 2, wherein the carbon nanotubes are fixed directly on the metal substrate; or wherein a substrate layer is present on the metal substrate and the carbon nanotubes are fixed on the substrate layer.

4. Cathode unit according to any of the preceding claims, wherein the electrochemically active component is present in an amount of 0.5 mg to 10 mg/cm² of cathode collector.

5. Cathode unit according to any of the preceding claims, wherein the longitudinal axes of the fixed carbon nanotubes are aligned essentially at right angles to the surface of the cathode collector.

6. Alkali metal-sulphur battery comprising the cathode unit according to any of Claims 1-5.

7. Process for producing the cathode unit according to any of Claims 1-5, comprising the following process steps:
(i) providing a cathode collector comprising a metallic substrate,
(ii) fixing carbon nanotubes on the cathode collector by producing them on the surface of the cathode collector by means of chemical gas phase deposition, such that electrically conductive contact is present between the carbon nanotubes and the metallic substrate,
(iii) applying an electrochemically active component to the surface of the carbon nanotubes, the electrochemically active component being selected from sulphur or an alkali metal sulphide.

8. Process according to Claim 7, wherein, in step (i), a substrate layer or a particulate component is applied to the metallic substrate.

9. Process according to any of Claims 7-8, wherein, in step (iii), the sulphur is dissolved in a solvent and the solvent is contacted with the carbon nanotubes.

10. Process according to Claim 9, wherein both the solvent comprising the sulphur and the metallic cathode collector are heated prior to and/or during the application of the sulphur in step (iii) .

11. Process according to any of Claims 7-10, wherein sulphur is first applied to the surface of the carbon nanotubes and then reacted with a reactive alkali metal compound, preferably an organometallic alkali metal compound, to give an alkali metal sulphide.

## Revendications

1. Unité à cathode pour batterie à métal alcalin-souffre, comprenant:
- une dérivation de cathode comprenant un substrat métallique,
- des nanotubes de carbone qui sont fixés à la dérivation de cathode, étant réalisés sur la surface de la dérivation de cathode par l'intermédiaire d'un dépôt chimique en phase vapeur et qui sont en contact électriquement conducteur avec le substrat métallique,
- un composant électrochimiquement actif présent sur la surface des nanotubes de carbone, qui est sélectionné parmi le soufre ou un sulfure de métal alcalin,
dans laquelle les nanotubes de carbone sont présents dans une proportion de 0,1 à 100 mg/cm² de dérivation de cathode.

2. Unité à cathode selon la revendication 1, dans laquelle le substrat métallique est une feuille métallique.

3. Unité à cathode selon la revendication 1 ou 2, dans laquelle les nanotubes de carbone sont directement fixés sur le substrat métallique ; ou dans laquelle une couche de substrat est présente sur le substrat métallique et les nanotubes de carbone sont fixés sur la couche de substrat.

4. Unité à cathode selon l'une quelconque des revendications précédentes, dans laquelle le composant électrochimiquement actif est présent dans une proportion de 0,5 à 10 mg/cm² de dérivation de cathode.

5. Unité à cathode selon l'une quelconque des revendications précédentes, dans laquelle les axes longitudinaux des nanotubes de carbone fixés sont globalement orientés perpendiculairement à la surface de la dérivation de cathode.

6. Batterie à métal alcalin-souffre, comprenant l'unité à cathode selon l'une quelconque des revendications 1-5.

7. Procédé de fabrication d'une unité à cathode selon l'une quelconque des revendications 1-5, comprenant les étapes de procédé suivantes :
(i) fournir une dérivation de cathode comprenant ledit substrat métallique,
(ii) fixer des nanotubes de carbone sur la dérivation de cathode en les réalisant sur la surface de la dérivation de cathode par l'intermédiaire d'un dépôt chimique en phase vapeur de manière à ce qu'un contact électriquement conducteur soit présent entre les nanotubes de carbone et le substrat métallique,
(iii) déposer un composant électrochimiquement actif sur la surface des nanotubes de carbone, dans lequel le composant électrochimiquement actif est sélectionné parmi le soufre ou un sulfure de métal alcalin.

8. Procédé selon la revendication 7, dans lequel, lors de l'étape (i), une couche de substrat ou un composant sous forme de particules est déposé sur le substrat métallique.

9. Procédé selon l'une quelconque des revendications 7-8, dans lequel, lors de l'étape (iii), le soufre est dissous dans un solvant et le solvant est mis en contact avec les nanotubes de carbone.

10. Procédé selon la revendication 9, dans lequel le solvant contenant le soufre et la dérivation de cathode métallique sont chauffés avant et/ou pendant le dépôt du soufre effectué lors de l'étape (iii).

11. Procédé selon l'une quelconque des revendications 7-10, dans lequel le soufre est en outre déposé sur la surface des nanotubes de carbone puis est transformé en un sulfure de métal alcalin par un composé de métal alcalin réactif, de préférence un composé de métal alcalin organométallique.
